# EUROPÄISCHE PATENTANMELDUNG

(11) **EP 1 549 108 A2**
(43) Veröffentlichungstag der Anmeldung: **29.06.2005**
(21) Anmeldenummer: 04028078.6
(22) Anmeldetag: 26.11.2004
(51) Int. Cl.: H05B 33/08

(54) **Beleuchtungsanordnung für ein Zweirad, insbesondere ein Fahrrad**

(30) Priorität: 26.11.2003 DE 10355851
(71) Anmelder: Busch & Müller KG, 58540 Meinerzhagen (DE)
(72) Erfinder: Mohr, Manfred, 51647 Gummersbach (DE)
(74) Vertreter: Kahlhöfer, Hermann

(57) **Zusammenfassung**

Gegenstand der Erfindung ist eine Beleuchtungsanordnung für ein Zweirad, insbesondere ein Fahrrad, mit einer Hauptlichtquelle, mit einem Anschluss (33) für einen eine Wechselspannung (UW) liefernden Stromgenerator (18) und einem aus der Wechselspannung (UW) eine Gleichspannung (UG) einer ersten Spannungshöhe (U1) erzeugenden Gleichrichtungsmittel (20) und/oder einem Anschluss (33) für einen eine Gleichspannung (UG) einer ersten Spannungshöhe (U1) abgebenden Energiespeicher (32), mit mindestens einem Transformationsmittel (24), welches die Gleichspannung (UG) der ersten Spannungshöhe (U1) in eine Gleichspannung (UG) einer zweiten Spannungshöhe (U2) transformieren kann. Die erfindungsgemäße Beleuchtungsanordnung zeichnet sich dadurch aus, dass die Hauptlichtquelle mindestens eine Leuchtdiode (2) umfasst und dass die zweite Spannungshöhe (U1) größer ist als die Durchlassspannung der mindestens einen Leuchtdiode (2).

Die erfindungsgemäße Beleuchtungsanordnung für ein Zweirad ermöglicht in vorteilhafter Weise die Verwendung einer Leuchtdiode (2), insbesondere einer im wesentlichen weißes Licht abstrahlenden Leuchtdiode (2), als Hauptlichtquelle eines Zweirades, insbesondere eines Fahrrades, die den Fahrlichtkegel erzeugt. Die erfindungsgemäße Schaltung ermöglicht in vorteilhafter Weise den flackerfreien Betrieb dieser Hauptlichtquelle auch bei sehr niedrigen Geschwindigkeiten des Zweirades und damit gekoppelt entsprechend niedriger Frequenzen des Generators (18).

## Beschreibung

Gegenstand der Erfindung ist eine Beleuchtungsanordnung für ein Zweirad, insbesondere ein Fahrrad, wie beispielsweise ein Fahrradscheinwerfer, die eine Leuchtdiode, insbesondere eine ein weißes Licht ausstrahlende Leuchtdiode, als Hauptlichtquelle nutzt.

Stand der Technik sind bekannte Fahrradscheinwerfer, die eine Glühlampe als Hauptlichtquelle nutzen und gegebenenfalls Leuchtdioden als Standlicht einsetzten. Weiterhin wurde versucht, Fahrradscheinwerfer zu etablieren, deren Fahrlichtkegel durch das Licht einer oder mehrerer Leuchtdioden gebildet wird. Bisher scheiterte dies an mehreren Problemen in Bezug auf die Verkehrssicherheit und die Betriebssicherheit. Die Verkehrssicherheit war im Regelfall nicht oder nur ungenügend gegeben, da die Leuchtdioden im wesentlichen in eine Richtung ihr Licht emittieren und die Einhaltung von gesetzlichen Bestimmungen, insbesondere in Deutschland, einen ganz bestimmten Fahrlichtkegel benötigen, der bei Emission des Lichtes im wesentlichen in eine Richtung nur durch den Einsatz von Linsen unter Lichtbrechung und dies auch nur ungenügend zu gewährleisten war. Weiterhin war die Betriebssicherheit insbesondere bei längerem Betrieb dieser Scheinwerfer nicht gewährleistet, da es regelmäßig zu Ausfällen der Scheinwerfer kam.

Hiervon ausgehend ist es Aufgabe der vorliegenden Erfindung, eine Beleuchtungsanordnung für ein Zweirad vorzuschlagen, die mit mindestens einer Leuchtdiode betreibbar ist und die eine hohe Verkehrssicherheit und Betriebssicherheit erreicht.

Diese Aufgabe wird gelöst durch eine Beleuchtungsanordnung mit den Merkmalen der Ansprüche 1, 13 und 19. Vorteilhafte Weiterbildungen sind Gegenstand der jeweiligen abhängigen Ansprüche.

Die erfindungsgemäße Beleuchtungsanordnung für ein Zweirad, insbesondere ein Fahrrad, mit einer Hauptlichtquelle, mit einem Anschluss für einen eine Wechselspannung liefernden Stromgenerator und einem aus der Wechselspannung eine Gleichspannung einer ersten Spannungshöhe erzeugenden Gleichrichtungsmittel und/oder einem Anschluss für einen eine Gleichspannung einer ersten Spannungshöhe abgebenden Energiespeicher, mit mindestens einem Transformationsmittel, welches die Gleichspannung der ersten Spannungshöhe in eine höhere Gleichspannung einer zweiten Spannungshöhe transformieren kann, zeichnet sich dadurch aus, dass die Hauptlichtquelle mindestens eine Leuchtdiode umfasst und dass die zweite Spannungshöhe größer ist als die Durchlassspannung der mindestens einen Leuchtdiode.

Hauptlichtquelle bedeutet dass mit dieser Lichtquelle die Straße vor dem Zweirad ausgeleuchtet wird und diese insbesondere nicht ausschließlich als Standlicht, ausschließlich als Warnlicht für andere Verkehrsteilnehmer oder ähnliches dient. Unter einem Stromgenerator ist insbesondere ein Dynamo, bevorzugt ein Mitläuferdynamo oder ein Nabendynamo, besonders bevorzugt ein Nabendynamo zu verstehen. Unter einem Energiespeicher ist insbesondere ein Kondensator, ein Akkumulator oder eine Batterie zu verstehen, die jeweils elektrische Energie speichern können, die zum Betrieb der Beleuchtungsanordnung benötigt wird. Im Falle des Kondensators oder Akkumulators ist der Prozess der Energieabgabe im wesentlichen reversibel, dass heißt, dieser ist wieder aufladbar.

Die erfindungsgemäße Beleuchtungsanordnung, insbesondere ein Scheinwerfer mit einem entsprechenden Generator und/oder einem Energiespeicher, zeichnet sich dadurch aus, dass durch die Transformation der Gleichspannung bereits bei sehr kleiner Fahrtgeschwindigkeit die Durchlassspannung der mindestens einen Leuchtdiode wirkungsvoll überschritten wird, so dass selbst bei kleinen Fahrtgeschwindigkeiten ein entsprechender Fahrlichtkegel gebildet wird. Dies dient der Verkehrssicherheit des Zweirades und dessen Fahrers.

Gemäß einer weiteren vorteilhaften Ausgestaltung der erfindungsgemäßen Beleuchtungsanordnung kann mindestens eine Leuchtdiode im wesentlichen weißes Licht abstrahlen.

Leuchtdioden, die im wesentlichen weißes Licht abstrahlen, weisen eine sehr hohe Leuchtkraft auf, die in besonders vorteilhafter Weise zur Bildung des Fahrlichtkegels und somit zur Ausleuchtung der Fahrbahn vor dem Zweirad dienen kann.

Gemäß einer weiteren vorteilhaften Ausgestaltung der erfindungsgemäßen Beleuchtungsanordnung ist durch das Transformationsmittel eine kaskadenartige Transformation der Gleichspannung durchführbar.

Dies kann insbesondere durch den Aufbau des Transformationsmittels durch mehrere, bevorzugt in Reihe geschaltete Transformationsstufen erfolgen, bei denen die Gleichspannung von der ersten Spannungshöhe U1 über eine oder mehrere Zwischenspannungshöhen UM zur zweiten Spannungshöhe U2 transformiert wird.

Gemäß einer weiteren vorteilhaften Ausgestaltung der erfindungsgemäßen Beleuchtungsanordnung umfasst das Transformationsmittel eine Wandlerschaltung, insbesondere eine DC/DC-Wandlerschaltung, und/oder eine Spannungsvervielfacherschaltung.

Dies sind Schaltungsarten, die in besonders vorteilhafter Weise eine Transformation einer Gleichspannung von einer ersten Spannungshöhe U1 zu einer zweiten Spannungshöhe U2 ermöglichen.

Gemäß einer weiteren vorteilhaften Ausgestaltung der erfindungsgemäßen Beleuchtungsanordnung umfassen die Gleichrichtungsmittel eine Gleichrichterbrücke und einen Ladekondensator.

Eine Gleichrichterbrücke ist regelmäßig aus vier Dioden aufgebaut, die so verschaltet sind, dass sowohl die positiven, als auch die negativen Anteile einer Wechselspannung zur Gleichrichtung verwendet werden. Auch andere Gleichrichtungsmittel sind möglich und erfindungsgemäß.

Gemäß einer weiteren vorteilhaften Ausgestaltung der erfindungsgemäßen Beleuchtungsanordnung sind Glättungsmittel ausgebildet, die eine Glättung einer pulsierenden Gleichspannung bewirken.

Glättung bedeutet in diesem Zusammenhang, dass nach der Glättung die Schwankungen der Spannungshöhe der Gleichspannung deutlich geringer sind als vor der Glättung. Zudem ist beim Einsatz eines Dynamos das Glättungsmittel insbesondere bei kleinen Dynamofrequenzen von Vorteil um ein Flackern des Lichtes zu vermeiden.

Gemäß einer weiteren vorteilhaften Ausgestaltung der erfindungsgemäßen Beleuchtungsanordnung umfassen die Glättungsmittel zumindest einen Kondensator.

Ein Kondensator, insbesondere ein parallel zur zu betreibenden Leuchtdiode geschalteter Kondensator, erfüllt in einfacher Weise die Anforderungen an ein Glättungsmittel. Die Auslegung und Dimensionierung des Kondensators ist vorteilhafter Weise an die zu erfüllende Glättung, insbesondere an die Spannungshöhe der Spannung, der Stromstärke, die zu glättenden Frequenzen und/oder die benötigte Zeitkonstante der Glättung angepasst.

Gemäß einer weiteren vorteilhaften Ausgestaltung der erfindungsgemäßen Beleuchtungsanordnung ist ein Dämmerungsschaltmittel ausgebildet, welches die Beleuchtungsanordnung abhängig vom Umgebungslicht der Beleuchtungsanordnung betreibt.

Dies ermöglicht insbesondere die Ausbildung eines Fahrradscheinwerfers, welcher automatisch dann eingeschaltet wird, wenn die Umgebung des Fahrrads dunkler als ein bestimmter vorgegebener oder vorgebbarer Grenzwert ist, beispielsweise bei Einfahrt in einen Tunnel oder abends oder nachts.

Gemäß einer weiteren vorteilhaften Ausgestaltung der erfindungsgemäßen Beleuchtungsanordnung umfasst der Stromgenerator einen Dynamo, bevorzugt einen Mitläuferdynamo oder einen Nabendynamo, besonders bevorzugt einen Nabendynamo.

Insbesondere Nabendynamos haben sich als sehr vorteilhaft erwiesen, da diese beständig betrieben werden und im Regelfall einen geringeren Laufwiderstand, welcher vom Fahrer zusätzlich zu überwinden ist, aufweisen als andere Generatoren. Zudem bietet der kontinuierliche Betrieb des Nabendynamos die Möglichkeit, aus dem Signal des Dynamos weitere Kenngrößen wie beispielsweise die Geschwindigkeit oder auch die Beschleunigung des Zweirades abzuleiten.

Gemäß einer weiteren vorteilhaften Ausgestaltung der erfindungsgemäßen Beleuchtungsanordnung ist mindestens ein Energiespeicher ausgebildet, der mit der Leuchtdiode elektrisch verbindbar ist, so dass diese durch die im Energiespeicher gespeicherte elektrische Energie zumindest zeitweise, insbesondere beim Stand des Zweirades, betreibbar ist.

Als Energiespeicher lassen sich sowohl Akkumulatoren, Batterien als auch Kondensatoren einsetzen. In dem Fall, dass die Hauptlichtquelle auch beim Fahrbetrieb des Zweirades durch einen Energiespeicher betrieben wird, kann in vorteilhafter Weise die Hauptlichtquelle sowohl im Fahr- als auch im Standlichtbetrieb von dem Energiespeicher versorgt werden. Falls die Energieversorgung der Hauptlichtquelle im normalen Fahrbetrieb durch einen Generator gewährleistet wird, ist der Energiespeicher zusätzlich ausgebildet.

Besonders bevorzugt ist in diesem Zusammenhang, dass der Energiespeicher mindestens einen Kondensator umfasst.

Kondensatoren eignen sich in vorteilhafter Weise als Energiespeicher für den Standlichtbetrieb, da diese während der Fahrt durch einen Generator aufladbar und dann im Falle des Standes des Zweirades wieder entladbar sind. Hierbei kann der Kondensator bzw. allgemein der Energiespeicher im wesentlichen dauernd mit der Leuchtdiode verbunden sein oder auch durch spezielle Schaltmittel zuschaltbar sein, wenn beispielsweise durch geeignete Sensoren ein Anhalten des Fahrrades angezeigt wird.

Gemäß einer weiteren vorteilhaften Ausgestaltung der erfindungsgemäßen Beleuchtungsanordnung sind Konstantstromregelmittel ausgebildet sind, die die Versorgung der Leuchtdiode mit einem im wesentlichen konstanten Strom und/oder eine im wesentlichen konstante Spannung gewährleisten. Auch eine Konstanthaltung der von der Leuchtdiode aufgenommenen Leistung ist möglich.

Die Versorgung der Leuchtdiode mit einem im wesentlichen konstanten Strom führt zu einer konstanten und gleichmäßigen Leuchtstärke der Leuchtdiode. Dies ist ein wichtiger Vorteil für die Verkehrssicherheit des Zweirades, da unabhängig von der Geschwindigkeit des Zweirades die Hauptlichtquelle flackerfrei und gleichmäßig leuchtet. Insbesondere erfolgt hier auch der Betrieb der Leuchtdiode unabhängig von der Durchlasskennlinie der Leuchtdiode. Weiterhin entfällt die Notwendigkeit eine Z-Diode (Zener-Diode) als Überspannungsschutz ausbilden zu müssen, da unabhängig von der ersten Spannungshöhe die an der Leuchtdiode anliegende zweite Spannungshöhe gleich bleibt. Sofern eine Toleranz der Leuchtdioden bezüglich ihrer Durchlassspannung ausgeglichen werden soll, kann eine Konstanthaltung der aufgenommenen Leistung von Vorteil sein.

Gemäß einem weiteren Aspekt des erfindungsgemäßen Gedankens wird eine Beleuchtungsanordnung für ein Zweirad, insbesondere ein Fahrrad, vorgeschlagen, die insbesondere aber nicht notwendigerweise mit den bisher beschriebenen Ausgestaltungen zu kombinieren ist und die sich durch eine Hauptlichtquelle auszeichnet, die mindestens eine Leuchtdiode umfasst, wobei die Leuchtdiode thermisch leitend mit einem Kühlkörper, bevorzugt einem metallischen Kühlkörper, verbunden ausgebildet ist. Dieser Kühlkörper erstreckt sich bevorzugt auch entgegen der Leuchtrichtung.

Die Ausbildung des Kühlkörpers verbessert in vorteilhafter Weise die Wärmeabfuhr von der Leuchtdiode. Insbesondere im Dauerbetrieb entwickeln gerade leistungsstarke Leuchtdioden eine relativ große Abwärme, die möglichst kontrolliert von der Leuchtdiode abgeführt werden muss, um Beschädigungen der Leuchtdiode und/oder anderer Bauteilen zu vermeiden. Dies führt zu einer Verbesserung der Betriebssicherheit und damit folglich auch zu einer Verbesserung der Verkehrssicherheit des Zweirades.

Gemäß einer weiteren vorteilhaften Ausgestaltung der erfindungsgemäßen Beleuchtungsanordnung kann mindestens eine Leuchtdiode im wesentlichen weißes Licht abstrahlen.

Besonders weiße Hochleistungsleuchtdioden weisen eine relativ große Abwärme auf, die eine möglichst effektive Kühlung benötigen.

Gemäß einer weiteren vorteilhaften Ausgestaltung der erfindungsgemäßen Beleuchtungsanordnung ist der Kühlkörper aus einem Material mit einer Wärmeleitfähigkeit von weniger als 300 W/(m K), bevorzugt weniger als 250 W/(m K), insbesondere sogar weniger als 100 W/(m K) ausgebildet.

Da der freie Raum und damit auch das zur Kühlung zur Verfügung stehende Luftvolumen speziell in einem Scheinwerfer sehr begrenzt ist, kann in vorteilhafter Weise auf die Ausbildung des Kühlkörpers aus einem im Regelfall teuren Material mit einer hohen Wärmeleitfähigkeit wie beispielsweise Kupfer verzichtet werden und stattdessen ein Material gewählt werden, dessen Wärmeleitfähigkeit niedrig ist. Dies ist dadurch bedingt, dass Konvektion nur in sehr begrenztem Maße im Scheinwerfer zur Kühlung beitragen kann, so dass der Wärmeübergang vom Kühlkörper in die Luft begrenzt ist und es daher auf die Wärmeleitung im Kühlkörper nicht so stark ankommt.

Gemäß einer weiteren vorteilhaften Ausgestaltung der erfindungsgemäßen Beleuchtungsanordnung ist der Kühlkörper aus einem Leichtmetall, bevorzugt Aluminium oder einer Aluminiumlegierung, besonders bevorzugt Aluminium, ausgebildet.

Die Ausbildung des Kühlkörpers aus einem Leichtmetall, insbesondere Aluminium oder eine Aluminiumlegierung, verkleinert in vorteilhafter Weise das Gewicht der Beleuchtungsanordnung, beispielsweise des Scheinwerfers. Noch vorteilhafter kann die Verwendung eines durch Bemischungen in der Wärmeleitfähigkeit erhöhten Kunststoffes sein.

Gemäß einer weiteren vorteilhaften Ausgestaltung der erfindungsgemäßen Beleuchtungsanordnung weist der Kühlkörper mindestens einseitig Kühlrippen auf. Kühlrippen erleichtern in vorteilhafter Weise den Wärmeübergang vom Kühlkörper in die Luft.

Gemäß einer weiteren vorteilhaften Ausgestaltung der erfindungsgemäßen Beleuchtungsanordnung ist die Form des Kühlkörpers zumindest in Teilbereichen an die umgebenden Bauteile angepasst. Er kann dabei den Raum im Gehäuse weitgehend ausfüllen, wärmeleitenden Kontakt zu Teilbereichen des Gehäuses haben, oder sogar selbst als Teil des Gehäuses dienen. Gerade letztere Variante ist bezüglich Wärmeabfuhr und Aufbau eines Scheinwerfers besonders vorteilhaft und ermöglicht einen kompakten Aufbau der erfindungsgemäßen Beleuchtungsanordnung, beispielsweise eines Frontscheinwerfers eines Fahrrades.

Gemäß einem weiteren Aspekt des erfinderischen Gedankens wird eine Beleuchtungsanordnung für ein Zweirad, insbesondere ein Fahrrad, vorgeschlagen, die insbesondere mit den oben offenbarten Details kombiniert werden kann, wobei eine Hauptlichtquelle umfassend mindestens eine Leuchtdiode ausgebildet ist, wobei die Leuchtdiode eine Symmetrieachse aufweist, zu der sie rotationssymmetrisch ausgebildet ist und ein Reflektor ausgebildet ist, in dessen Wirkzentrum sich die Leuchtdiode befindet und durch dessen Formgebung der Fahrlichtkegel in den gewünschten Begrenzungen und Lichtverteilungen gebildet wird.

Unter Fahrlichtkegel ist der Lichtkegel zu verstehen, mittels dem die vor dem Zweirad liegende Fahrbahn ausgeleuchtet wird.

Die erfindungsgemäße Beleuchtungsanordnung ermöglicht in vorteilhafter Weise den Aufbau eines Fahrradscheinwerfers mit einem an sich üblichen genau für die jeweilige Beleuchtungsaufgabe berechneten Reflektor.

Gemäß einer weiteren vorteilhaften Ausgestaltung der erfindungsgemäßen Beleuchtungsanordnung kann mindestens eine Leuchtdiode ein im wesentlichen weißes Licht emittieren.

Gerade weiße Leuchtdioden ermöglichen in vorteilhafter Weise durch ihre hohe Leuchtkraft die Bildung eines Fahrlichtkegels, welcher den gesetzlichen Bestimmungen entspricht. Auch die Ausbildung der Hauptlichtquelle in multi- oder polychromatischer Form durch mehrere Leuchtdioden ist erfindungsgemäß möglich.

Gemäß einer weiteren vorteilhaften Ausgestaltung der erfindungsgemäßen Beleuchtungsanordnung weist die Leuchtdiode zumindest teilweise im wesentlichen eine Kegelstumpf- oder Kegelform auf. Besonders bevorzugt ist in diesem Zusammenhang, dass die Basisfläche und/oder die Seitenfläche des Kegels oder Kegelstumpfes als lichtemittierende Flächen dienen.

Im wesentlichen Kegelstumpf- oder Kegelförmig bedeutet insbesondere, dass die Leuchtdiode keine Form aufweist, die kuppelförmig ist. Diese Kuppelform ist eine weithin verbreitete Bauform bei Standard-LEDs, beispielsweise üblichen bekannten grünen LEDs. Diese LEDs emittieren Licht zum überwiegenden Teil in Richtung der Symmetrieachse der Kuppel, zu der die Kuppel im wesentlichen rotationssymmetrisch ist. Solche LEDs benötigen Streumittel oder Beugemittel, beispielsweise Linsen, durch die eine Sichtbarkeit des durch die LED emittierten Lichts in Richtungen ermöglicht wird, die mit der Symmetrieachse der LED einen Winkel ungleich null Grad einschließen. Mit solchen Linsen ist die Ausbildung eines Fahrlichtkegels schwierig, der den gesetzlichen Anforderungen in Deutschland entspricht, die eine ganz bestimmte Form und Lichtverteilung des Fahrlichtkegels bzw. dessen Projektion auf die Fahrbahn verlangen.

Hingegen weisen im wesentlichen kegelstumpf- oder kegelförmige LEDs vorteilhafterweise eine Strahlungscharakteristik auf, die nicht auf eine Lichtemission im wesentlichen in Richtung der Symmetrieachse der LED beschränkt ist, sondern die einen signifikanten Teil der abgestrahlten Leistung auch durch die Seitenfläche des Kegels oder Kegelstumpfes erlaubt. Dieser Vorteil kann dazu genutzt werden, mittels eines Reflektors einen Fahrlichtkegel zu bilden. Dies führt zu einer vorteilhaften Verbesserung der Verkehrssicherheit des Zweirades.

Gemäß einer weiteren vorteilhaften Ausgestaltung der erfindungsgemäßen Beleuchtungsanordnung umfasst der Reflektor eine Streuscheibe. Stattdessen oder auch zusätzlich kann der Reflektor aus speziell berechneten reflektierenden Flächen aufgebaut sein, also ein sogenannter Freiformreflektor.

Dies erlaubt die Ausbildung eines Reflektors, welcher angepasst an die jeweilige benötigte Form des Fahrlichtkegels ist. Insbesondere können übliche Reflektoren zum Einsatz kommen, wie sie auch schon bei Glühbirnen als Lichtquelle eingesetzt werden.

Gemäß einer weiteren vorteilhaften Ausgestaltung der erfindungsgemäßen Beleuchtungsanordnung weist die Leuchtdiode eine Leistung von mindestens einem Watt, bevorzugt mindestens 3 Watt auf.

Hierbei handelt es sich um sogenannte Hoch- oder Höchstleistungsdioden, die in vorteilhafter Weise zu einer besonders guten Ausleuchtung der Fahrbahn vor dem Zweirad dienen können.

Im folgenden wird die Erfindung näher anhand der Zeichnung beschrieben, ohne auf die dort gezeigten Ausführungsbeispiele beschränkt zu sein. Es zeigen:
- Fig. 1: schematisch einen erfindungsgemäßen Frontscheinwerfer in einer ersten Ansicht;
- Fig. 2: schematisch einen erfindungsgemäßen Frontscheinwerfer in einer zweiten Ansicht;
- Fig. 3: schematisch einen Schaltplan eines zweiten Ausführungsbeispiels einer erfindungsgemäßen Beleuchtungsanordnung;
- Fig. 4: schematisch einen Schaltplan eines dritten Ausführungsbeispiels einer erfindungsgemäßen Beleuchtungsanordnung; und
- Fig. 5: schematisch einen Schaltplan eines vierten Ausführungsbeispiels einer erfindungsgemäßen Beleuchtungsanordnung.

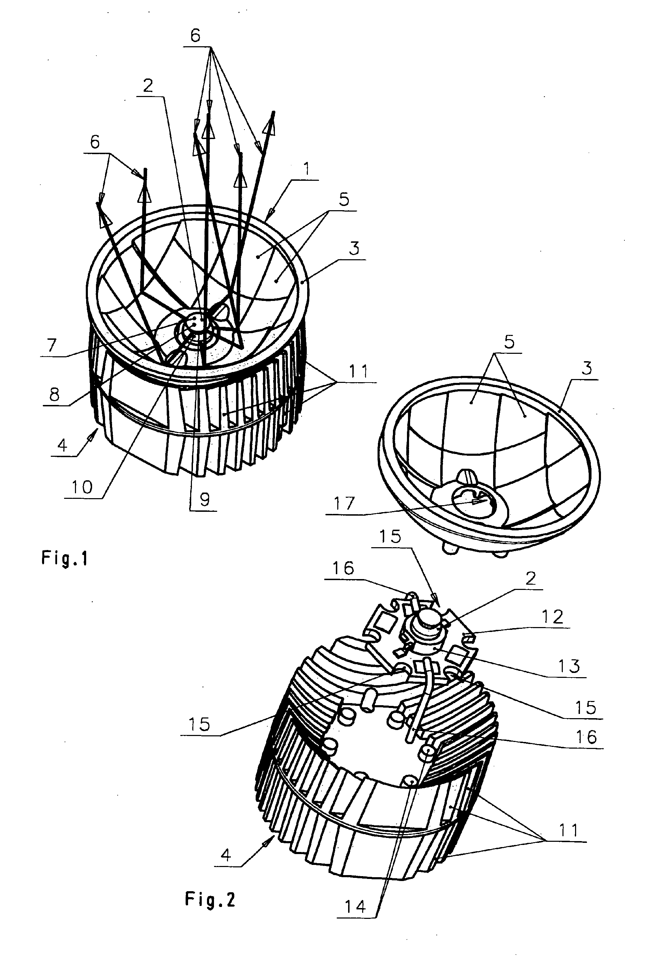

Fig. 1 zeigt schematisch einen erfindungsgemäßen Frontscheinwerfer 1 eines Fahrrades, welcher eine Leuchtdiode 2, einen Reflektor 3 und einem Kühlkörper 4 umfasst. Die Leuchtdiode 2 dient als Hauptlichtquelle. Das heißt, die Leuchtdiode 2 dient nicht nur beispielsweise einer Standlichtfunktion, sie wird vielmehr zur Ausleuchtung der Fahrbahn vor dem Fahrrad verwendet. Hierzu werden bevorzugt Leuchtdioden 2 eingesetzt, die im wesentlichen weißes Licht abstrahlen, da diese eine sehr hohe Leuchtkraft aufweisen.

Der Reflektor 2 ist im vorliegenden Ausführungsbeispiel ein Freiformreflektor, welcher aus einer Vielzahl von frei formbaren Flächen 5 aufgebaut ist. Hierbei wird Form und Lage der einzelnen Flächen 5 relativ zur Leuchtdiode 2 so festgelegt, dass der gewünschte bzw. zur Einhaltung gesetzlicher Bestimmungen benötigte Fahrlichtkegel durch den Frontscheinwerfer 1 erzeugt wird. Jedoch ist auch ein Reflektor 3 möglich und erfindungsgemäß, welcher ein üblicher Streuscheibenreflektor ist.

Die von der Leuchtdiode 2 emittierten und beispielhaft gezeigten Lichtstrahlen 6, deren Ausbreitungsrichtung durch Pfeile markiert ist, werden durch den Reflektor 3 umgelenkt und bilden in ihrer Gesamtheit den Fahrlichtkegel, mittels dem die Fahrbahnoberfläche vor dem Zweirad, insbesondere Fahrrad ausgeleuchtet wird. Die Leuchtdiode 2 ist als sogenannter "side-emitter" ausgeführt, dass heißt, als Leuchtdiode 2, die nicht nur in einer Richtung Licht emittiert, sondern auch zu den Seiten Licht emittiert. Die Leuchtdiode 2 weist einen im wesentlichen kegelstumpfförmigen Anteil 7 mit einer Basisfläche 8 und einer Seitenfläche 9 auf, der mit einem Sockelteil 10 verbunden ist. Auch das Sockelteil 10 kann vorteilhaft im wesentlichen kegelstumpfförmig ausgebildet sein, jedoch ist auch jede andere in Bezug auf eine Achse rotationssymmetrische Form möglich und erfindungsgemäß.

Eine solche als "side-emitter" aufgebaute Leuchtdiode 2 weist eine Strahlungscharakteristik ähnlich einer Glühlampe auf, die mittels eines Reflektors 3 zur Erzeugung des Fahrlichtkegels genutzt werden kann. Herkömmliche Leuchtdioden, die im Regelfall im wesentlichen eine Kuppelform aufweisen, emittieren im wesentlichen in Richtung der Symmetrieachse der Kuppelform, so dass bei solchen herkömmlichen Leuchtdioden mindestens eine Linse, beispielsweise eine Fresnel-Linse, ausgebildet werden muss, um einen Fahrlichtkegel einer gewünschten Form zu erzeugen. Bei der erfindungsgemäßen Beleuchtungsanordnung kann auf die Ausbildung von Linsen zur Formung des Fahrlichtkegels verzichtet werden, dass heißt, die Bildung des Fahrlichtkegels erfolgt im wesentlichen fokussierfrei.

Die Leuchtdiode 2 ist thermisch leitend mit dem Kühlkörper 4 verbunden. Dieser Kühlkörper 4 ist als zweiseitiger Rippenkühlkörper ausgebildet, der eine Mehrzahl von Kühlrippen 11 aufweist. Eine Seite des Kühlkörpers 4 ist an die Reform des Reflektors 3 angepasst. Der Kühlkörper 4 ist vorzugsweise aus Metall ausgebildet. Bevorzugt wird der Kühlkörper 4 aus einem Material, bevorzugt einem Metall, mit einer Wärmeleitfähigkeit von weniger als 300 W/(m K), bevorzugt weniger als 250 W/(m K) ausgebildet. Sogar spezieller Kunststoff mit einer Wärmeleitfähigkeit unter 100 W/(m K) kann eingesetzt werden. Im vorliegenden Beispiel ist der Kühlkörper 4 aus Leichtmetall, bevorzugt Aluminium oder eine Aluminium-Legierung, ausgebildet.

Beim vorliegenden Ausführungsbeispiel ist die Ausbildung des Kühlkörpers 4 aus Leichtmetall bzw. aus einem Metall mit einer niedrigen Wärmeleitfähigkeit bevorzugt, da solche Frontscheinwerfer regelmäßig gekapselt ausgebildet werden. Dies bewirkt, dass es nur in sehr begrenztem Maße im Scheinwerfergehäuse zur Konvektion von Luft kommt. Diese geringe Konvektion soll durch Ausbildung des Kühlkörpers 4 in vorteilhafter Weise genutzt werden. Da jedoch die Luftmenge und deren Konvektion nur begrenzt ist, ist folglich auch der Wärmeübergang vom Kühlkörper in die Luft begrenzt, so dass in vorteilhafter Weise auf die Ausbildung des Kühlkörpers 4 aus einem Material mit einer höheren Wärmeleitfähigkeit wie beispielsweise Kupfer verzichtet werden kann. Das Scheinwerfergehäuse kann zusätzliche Modifikationen zur besseren Wärmeabfuhr nach außen aufweisen. Der Kühlkörper 4 kann ein- oder mehrteilig ausgebildet sein.

Der erfindungsgemäße Kühlkörper 4 kann unabhängig davon eingesetzt werden, ob die Leuchtdiode 2 einen zumindest teilweise kegelstumpfförmigen Aufbau aufweist oder ob und wie der Reflektor 3 ausgebildet ist und jeweils umgekehrt.

Fig. 2 zeigt den erfindungsgemäßen Fahrradscheinwerfer in einer zerlegten Ansicht. Die Leuchtdiode 2 ist auf einer Platine 12 ausgebildet, die mit entsprechenden Aufnahmemitteln 13 für die Leuchtdiode 2 versehen ist. Im zusammengebauten Zustand sind Platine 12 und Kühlkörper 4 form- und/oder kraftschlüssig, sowie thermisch leitend miteinander verbunden. Zur Ausbildung des Form- und/oder Kraftschlusses weißt der Kühlkörper 4 erste Verbindungsmittel 14 auf, die so korrespondierend zu zweiten Verbindungsmitteln 15 der Platine 12 ausgebildet sind, dass diese zusammenwirkend einen Form- und/oder Kraftschluss bewirken. Die Platine 12 weißt weiterhin Kabelverbindungen 16 auf, die der Versorgung der Leuchtdiode 2 mit elektrischer Energie dienen.

Der Reflektor 3 weist Ausnehmungen 17 auf, die mit der Form der Leuchtdiode 2, des Aufnahmemittels 13, der Kabelverbindung 16 und/oder anderer Bauteile auf der Platine 12 so korrespondieren, dass die Leuchtdiode 2 im zusammengebauten Zustand des Frontscheinwerfers im wesentlichen im Wirkzentrum des Reflektors 2 ausgebildet und dort weitestgehend nicht beweglich ist.

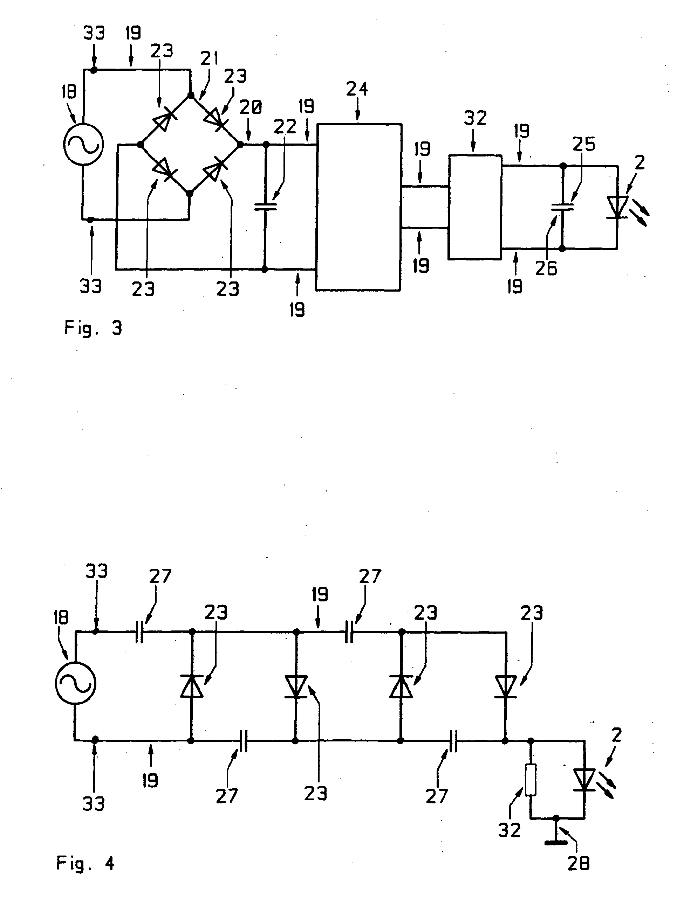

Leuchtdioden 2 benötigen zum Betrieb eine Spannung, die oberhalb der Durchlassspannung der Leuchtdiode 2 liegt. Weiterhin besteht das Problem, dass Leuchtdioden 2 mit einer Gleichspannung betrieben werden müssen, jedoch übliche Generatoren an Zweirädern, insbesondere Fahrrädern, eine Wechselspannung erzeugen. Dies ist die Ursache von Problemen, wenn beispielsweise beim Fahrrad die Betriebsspannung durch einen durch den Fahrradfahrer betriebenen Generator, beispielsweise einen Dynamo, insbesondere einen Nabendynamo, insbesondere bei sehr kleinen Fahrgeschwindigkeiten. Als Generatoren sind beispielsweise Mitläufer- oder Nabendynamos üblich, die eine Wechselspannung liefern. Eine andere Möglichkeit ist der Betrieb der Beleuchtungsanordnung mit einem Energiespeicher, der eine elektrische Gleichspannung einer ersten Spannungshöhe abgibt. Um einen flackerfreien Betrieb der Beleuchtungsanordnung beispielsweise auch bei niedrigen Dynamofrequenzen zu ermöglichen, wird erfindungsgemäß vorgeschlagen, die Wechselspannung zu einer Gleichspannung einer ersten Spannungshöhe gleichzurichten, diese Gleichspannung auf eine zweite Spannungshöhe hochzutransformieren, gegebenenfalls zu glätten und dann der Leuchtdiode 2 zuzuführen. Weiterhin werden in vorteilhafter Weise Konstantstromregelmittel vorgeschlagen, die ein gleichmäßiges Leuchten der Hauptlichtquelle beziehungsweise der Leuchtdiode 2 bewirken. Eine entsprechende Schaltung für einen Generator, der eine Wechselspannung abgibt, ist Fig. 3 zu entnehmen.

Fig. 3 zeigt einen Stromgenerator 18, beispielsweise einen Dynamo, bevorzugt einen Nabendynamo, der eine Wechselspannung UW abgibt. Dieser ist über einen Anschluss 33 und elektrische Leitungen 19 mit einem Gleichrichtungsmittel 20 verbunden, in dem die Wechselspannung UW in eine Gleichspannung UG einer ersten Spannungshöhe U1 umgewandelt wird. Im vorliegenden Ausführungsbeispiel umfasst das Gleichrichtungsmittel 20 eine Gleichrichterbrücke 21 und einen Ladekondensator 22. Die Gleichrichterbrücke 21 umfasst vier Dioden 23, die beispielsweise entsprechend Fig. 3 miteinander verschaltet sind. Auch andere Gleichrichtungsmittel 20 sind möglich und erfindungsgemäß, beispielsweise eine Einweg-Gleichrichterschaltung mittels einer Diode 23 oder auch eine Mittelpunkts-Gleichrichterschaltung mit mindestens zwei entsprechend geschalteten Dioden 23.

Das Gleichrichtungsmittel 20 ist über elektrische Leitungen 19 mit einem Transformationsmittel 24 verbunden. Im Transformationsmittel 24 wird die Gleichspannung UG der ersten Spannungshöhe U1 in eine Gleichspannung UG einer zweiten Spannungshöhe U2 hochtransformiert. Als Transformationsmittel 24 können bevorzugt Wandlerschaltungen, insbesondere DC/DC-Wandlerschaltungen, oder Spannungsvervielfacherschaltungen eingesetzt werden, wobei auch jede andere Art von Transformationsmitteln 24 eingesetzt werden kann. Bevorzugt ist weiterhin ein kaskadenförmiger Aufbau des Transformationsmittels 24, bei dem eine Mehrzahl von Transformationsstufen, bevorzugt zwei, vorgenommen wird. Dies führt zu einer Erhöhung der Spannungshöhe der Gleichspannung UG von der ersten Spannungshöhe U1 zu einer Zwischenspannungshöhe UM und daran anschließend von der Zwischenspannungshöhe UM zur zweiten Spannungshöhe U2, die zumindest genauso groß ist wie die Durchlassspannung der Leuchtdiode 2. Bei einer größeren Zahl von Kaskadenstufen sind entsprechend mehr Zwischenspannungshöhen vorhanden.

Die Gleichspannung UG der zweiten Spannungshöhe U2 wird zur Versorgung der Leuchtdiode 2 verwendet, die über elektrische Leitungen 19 mit dem Transformationsmittel 24 verbunden ist. Wenn nötig, kann weiterhin ein Glättungsmittel 25 ausgebildet sein, um die durch das Transformationsmittel 24 zur Verfügung gestellte Gleichspannung UG zu glätten, falls beispielsweise noch Wechselspannungsanteile vorliegen, beispielsweise indem eine gewisse Spannungshöhenmodulation der Gleichspannung UG vorliegt. Die Glättungsmittel 25 sind im vorliegenden Beispiel in Form eines parallel zur Leuchtdiode 2 geschalteten Glättungskondensators 26 ausgebildet. Die Dimensionierung insbesondere des Glättungsmittels 25, beispielsweise die einzusetzende Kapazität des Glättungskondensators 26, erfolgt in Abhängigkeit vom eingesetzten Transformationsmittel 24 und dessen Kenngrößen.

Weiterhin sind Konstantstromregelmittel 32 ausgebildet, die gewährleisten, dass die Leuchtdiode 2 stets mit einem im wesentlichen konstanten Strom versorgt wird, so dass das Hauptlichtmittel bzw. die Leuchtdiode 2 im wesentlichen konstant leuchten und insbesondere nicht flackern. Diese Regelung erfolgt geschwindigkeitsunabhängig, dass heißt, selbst bei sehr kleinen Fahrgeschwindigkeiten leuchtet die Leuchtdiode 2 im wesentlichen konstant.

Bei einer Spannungsvervielfacherschaltung wie Fig. 4 zu entnehmen liegen Gleichrichtungsmittel 20 und Transformationsmittel 24 in vorteilhafter Weise kombiniert in einer einzigen Spannungsvervielfacherschaltung 30 vor. Hier ist der Stromgenerator 18 über einen Anschluss 33 und elektrische Leitungen 19 mit einer Mehrzahl von Kondensatoren 27 und Dioden 23 verbunden, die zu einer Gleichrichtung und Vervielfachung der durch den Stromgenerator 18 erzeugten Wechselspannung einer ersten Spannungshöhe U1 führen. Mit dieser Gleichspannung UG der Spannungshöhe U2 im Abgreifpunkt 28 gegenüber Masse 29 anliegt, erfolgt die Versorgung der Leuchtdiode 2 mit elektrischem Strom. Die zweite Spannungshöhe U2 liegt über der Durchlassspannung der Leuchtdiode 2. Weiterhin ist ein Konstantstromregelmittel 32 ausgebildet, das die selben Funktionen erfüllt wie oben dargelegt.

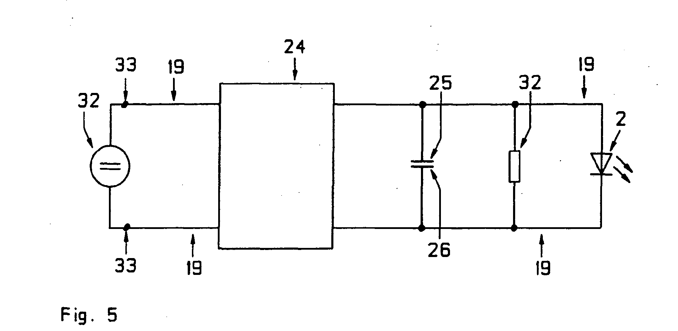

Fig. 5 zeigt eine erfindungsgemäße Beleuchtungsanordnung eines Zweirades, insbesondere eines Fahrrades, bei der ein Energiespeicher 31, der eine Gleichspannung UG einer ersten Spannungshöhe U1 abgeben kann, bevorzugt eine Batterie und/oder ein Akkumulator, über einen Anschluss 33 und elektrische Leitungen 19 mit dem Transformationsmittel 24 verbunden sind. Im Transformationsmittel 24 erfolgt die Transformation der Gleichspannung UG von der ersten Spannungshöhe U1 zu einer zweiten Spannungshöhe U2, die größer als die erste Spannungshöhe U1 und größer als die Durchlassspannung der Leuchtdiode 2 ist. Hier können alle beschriebenen Transformationsmittel 24, wie DC/DC-Wandler- und/oder Spannungsvervielfacherschaltungen, erfindungsgemäß zum Einsatz kommen genauso wie jedes andere Transformationsmittel 24, mit welchem die Transformation einer Gleichspannung UG von einer ersten Spannungshöhe U1 auf eine zweite, höhere, Spannungshöhe U2 erfolgen kann. Gegebenenfalls, vorzugsweise dann, wenn die Transformationsmittel 24 eine Wandlerschaltung, insbesondere eine DC/DC-Wandlerschaltung, umfassen, kann dem Transformationsmittel 24 vorteilhafterweise ein Glättungskondensator 26 oder ein anderes Glättungsmittel 25 nachgeschaltet sein, welches über elektrische Leitungen 19 mit diesem verbunden ist. Die Ausgangsspannung des Transformationsmittels 24 der Spannungshöhe U2 wird gegebenenfalls nach Glättung durch die Glättungsmittel 25 über elektrische Leitungen 19 an die Leuchtdiode 2 angelegt. Weiterhin ist ein Konstantstromregelmittel 32 ausgebildet, welches dieselben Funktionen erfüllt wie oben dargelegt.

Die einzelnen Bauelemente wie beispielsweise Gleichrichtungsmittel 20, Glättungsmittel 25, Konstantstromregelmittel 32 und/oder Transformationsmittel 24 können gegebenenfalls gemeinsam mit anderen Bauteilen zumindest teilweise auf einer einzigen Platine und/oder in einem einzigen integrierten Schaltkreis ausgebildet werden. Ein solcher integrierter Schaltkreis kann in besonders vorteilhafter Weise noch weitere funktionelle Bauelemente umfassen, die beispielsweise eine konstante Referenzspannung liefern. Weiterhin können in vorteilhafter Weise auch Schaltelemente, bevorzugt MOS-FETs, zur Schaltung der beim Betrieb von Leuchtdioden 2, insbesondere weiß leuchtenden Leuchtdioden 2, auftretenden sehr hohen Ströme von mehr als 500mA, bevorzugt mehr als 1A, ausgebildet sein.

Die hier beschriebenen Details einer Beleuchtungsanordnung können in besonders vorteilhafter Weise - gegebenenfalls mit Ausnahme des Generators 18 bzw. des Energiespeichers 31 - in einem einzigen Bauteil wie beispielsweise einem Frontscheinwerfer, insbesondere für ein Fahrrad, verwirklicht werden.

Die erfindungsgemäße Beleuchtungsanordnung für ein Zweirad ermöglicht in vorteilhafter Weise die Verwendung einer Leuchtdiode 2, insbesondere einer im wesentlichen weißes Licht abstrahlenden Leuchtdiode 2, als Hauptlichtquelle eines Zweirades, insbesondere eines Fahrrades, die den Fahrlichtkegel erzeugt. Die erfindungsgemäße Schaltung ermöglicht in vorteilhafter Weise den Betrieb dieser Hauptlichtquelle auch bei sehr niedrigen Geschwindigkeiten des Zweirades und damit gekoppelt entsprechend niedriger Frequenzen des Generators 18.

### Bezugszeichenliste

- 1: Frontscheinwerfer
- 2: Leuchtdiode
- 3: Reflektor
- 4: Kühlkörper
- 5: Fläche
- 6: Lichtstrahl
- 7: kegelstumpfförmiger Anteil
- 8: Basisfläche
- 9: Seitenfläche
- 10: Sockelteil
- 11: Kühlrippe
- 12: Platine
- 13: Aufnahmemittel
- 14: erste Verbindungsmittel
- 15: zweite Verbindungsmittel
- 16: Kabelverbindung
- 17: Ausnehmung
- 18: Generator
- 19: elektrische Leitung
- 20: Gleichrichtungsmittel
- 21: Gleichrichterbrücke
- 22: Ladekondensator
- 23: Diode
- 24: Transformationsmittel
- 25: Glättungsmittel
- 26: Glättungskondensator
- 27: Kondensator
- 28: Abgreifpunkt
- 29: Masse
- 30: Spannungsvervielfacherschaltung
- 31: Energiespeicher
- 32: Konstantstromregelmittel
- 33: Anschluss

- UG: Gleichspannung
- UM: Zwischenspannungshöhe
- UW: Wechselspannung
- U1: erste Spannungshöhe
- U2: zweite Spannungshöhe

## Patentansprüche

1. Beleuchtungsanordnung für ein Zweirad, insbesondere ein Fahrrad,
mit einer Hauptlichtquelle,
mit einem Anschluss (33) für einen eine Wechselspannung (UW) liefernden Stromgenerator (18) und einem aus der Wechselspannung (UW) eine Gleichspannung (UG) einer ersten Spannungshöhe (U1) erzeugenden Gleichrichtungsmittel (20) und/oder einem Anschluss (33) für einen eine Gleichspannung (UG) einer ersten Spannungshöhe (U1) abgebenden Energiespeicher (32),
mit mindestens einem Transformationsmittel (24), welches die Gleichspannung (UG) der ersten Spannungshöhe (U1) in eine Gleichspannung (UG) einer zweiten Spannungshöhe (U2) transformieren kann,
**dadurch gekennzeichnet, dass** die Hauptlichtquelle mindestens eine Leuchtdiode (2) umfasst und dass die zweite Spannungshöhe (U2) größer ist als die Durchlassspannung der mindestens einen Leuchtdiode (2).

2. Beleuchtungsanordnung nach Anspruch 1, **dadurch gekennzeichnet, dass** mindestens eine Leuchtdiode (2) im wesentlichen weißes Licht abstrahlen kann.

3. Beleuchtungsanordnung nach Anspruch 1 oder 2, **dadurch gekennzeichnet, dass** durch das Transformationsmittel (24) eine kaskadenartige Transformation der Gleichspannung (UG) durchführbar ist.

4. Beleuchtungsanordnung nach Anspruch 3, **dadurch gekennzeichnet, dass** das Transformationsmittel (24) eine Wandlerschaltung, insbesondere eine DC/DC-Wandlerschaltung, und/oder eine Spannungsvervielfacherschaltung (30) umfasst.

5. Beleuchtungsanordnung nach Anspruch 4, **dadurch gekennzeichnet, dass** die Gleichrichtungsmittel (20) eine Gleichrichterbrücke (21) und einen Ladekondensator (22) umfassen.

6. Beleuchtungsanordnung nach einem der vorhergehenden Ansprüche, **dadurch gekennzeichnet, dass** Glättungsmittel (25) ausgebildet sind, die eine Glättung der Gleichspannung (UG) bewirken.

7. Beleuchtungsanordnung nach Anspruch 6, **dadurch gekennzeichnet, dass** die Glättungsmittel (25) zumindest einen Kondensator (26) umfassen.

8. Beleuchtungsanordnung nach einem der vorhergehenden Ansprüche, **dadurch gekennzeichnet, dass** ein Dämmerungsschaltmittel ausgebildet ist, welches die Beleuchtungsanordnung abhängig vom Umgebungslicht der Beleuchtungsanordnung betreibt.

9. Beleuchtungsanordnung nach einem der vorhergehenden Ansprüche, **dadurch gekennzeichnet, dass** der Stromgenerator (18) einen Dynamo, bevorzugt einen Mitläuferdynamo oder einen Nabendynamo, besonders bevorzugt einen Nabendynamo umfasst.

10. Beleuchtungsanordnung nach einem der vorhergehenden Ansprüche, **dadurch gekennzeichnet, dass** mindestens ein Energiespeicher ausgebildet ist, der mit der Leuchtdiode (2) elektrisch verbindbar ist, so dass diese durch die im Energiespeicher gespeicherte elektrische Energie zumindest zeitweise, insbesondere beim Stand des Zweirades, betreibbar ist.

11. Beleuchtungsanordnung nach Anspruch 10, **dadurch gekennzeichnet, dass** der Energiespeicher mindestens einen Kondensator umfasst.

12. Beleuchtungsanordnung nach einem der vorhergehenden Ansprüche, **dadurch gekennzeichnet, dass** Konstantstromregelmittel (32) ausgebildet sind, die die Versorgung der Leuchtdiode (2) mit einem im wesentlichen konstanten Strom und/oder einer im wesentlichen konstanten Spannung oder einer konstanten Leistung gewährleisten.

13. Beleuchtungsanordnung für ein Zweirad, insbesondere ein Fahrrad, insbesondere nach einem der vorhergehenden Ansprüche,
mit einer Hauptlichtquelle, **dadurch gekennzeichnet, dass** die Hauptlichtquelle mindestens eine Leuchtdiode (2) umfasst, wobei die Leuchtdiode (2) thermisch leitend mit einem Kühlkörper (4), bevorzugt einem metallischen Kühlkörper (4), verbunden ausgebildet ist.

14. Beleuchtungsanordnung nach Anspruch 13, **dadurch gekennzeichnet, dass** mindestens eine Leuchtdiode (2) im wesentlichen weißes Licht abstrahlen kann.

15. Beleuchtungsanordnung nach Anspruch 13 oder 14, **dadurch gekennzeichnet, dass** der Kühlkörper (4) aus einem Material mit einer Wärmeleitfähigkeit von weniger als 300 W/(m K), bevorzugt weniger als 250 W/(m K), insbesondere weniger als 100 W/(m K), ausgebildet ist.

16. Beleuchtungsanordnung nach einem der Ansprüche 13 bis 15, **dadurch gekennzeichnet, dass** der Kühlkörper (4) aus einem Leichtmetall, bevorzugt Aluminium oder einer Aluminiumlegierung, besonders bevorzugt Aluminium, ausgebildet ist.

17. Beleuchtungsanordnung nach einem der Ansprüche 13 bis 16, **dadurch gekennzeichnet, dass** der Kühlkörper (4) mindestens einseitig Kühlrippen (11) aufweist.

18. Beleuchtungsanordnung nach einem der Ansprüche 13 bis 17, **dadurch gekennzeichnet, dass** die Form des Kühlkörpers (4) zumindest in Teilbereichen an die Form umgebender Bauteile angepasst ist oder Teilbereiche eines Gehäuses bildet.

19. Beleuchtungsanordnung für ein Zweirad, insbesondere ein Fahrrad, insbesondere nach einem der vorhergehenden Ansprüche, wobei eine Hauptlichtquelle umfassend mindestens eine Leuchtdiode (2) ausgebildet ist, **dadurch gekennzeichnet, dass** die Leuchtdiode (2) eine Symmetrieachse aufweist, zu der sie rotationssymmetrisch ausgebildet ist und dass sie sich im Wirkzentrum eines frei geformten Reflektors (3) befindet, durch dessen Formgebung der Fahrlichtkegel im wesentlichen eine gewünschte Lichtverteilung erhält.

20. Beleuchtungsanordnung nach Anspruch 19, **dadurch gekennzeichnet, dass** mindestens eine Leuchtdiode (2) ein im wesentlichen weißes Licht emittieren kann.

21. Beleuchtungsanordnung nach einem der vorhergehenden Ansprüche, **dadurch gekennzeichnet, dass** die Leuchtdiode (2) zumindest teilweise im wesentlichen eine Kegelstumpf- (7) oder Kegelform aufweist.

22. Beleuchtungsanordnung nach Anspruch 21, **dadurch gekennzeichnet, dass** die Basisfläche (8) und/oder die Seitenfläche (9) des Kegels oder Kegelstumpfes (7) als lichtemittierende Flächen dienen.

23. Beleuchtungsanordnung nach einem der Ansprüche 19 bis 22, **dadurch gekennzeichnet, dass** der Reflektor (3) eine Streuscheibe umfasst.

24. Beleuchtungsanordnung nach einem der Ansprüche 19 bis 23, **dadurch gekennzeichnet, dass** der Reflektor (3) aus einer Mehrzahl von reflektierenden Flächen (5) aufgebaut ist.

25. Beleuchtungsanordnung nach einem der vorhergehenden Ansprüche, **dadurch gekennzeichnet, dass** die Leuchtdiode (2) eine Leistung von mindestens einem Watt, bevorzugt mindestens 3 Watt aufweist.
